# NEUE EUROPÄISCHE PATENTSCHRIFT

(11) **EP 1 492 692 B2**
(45) Veröffentlichungstag und Bekanntmachung des Hinweises auf die Entscheidung über den Einspruch: **23.11.2011**
(45) Hinweis auf die Patenterteilung: 18.10.2006
(21) Anmeldenummer: 03717251.7
(22) Anmeldetag: 31.03.2003
(51) Int. Cl.: B61H 15/00, F16D 65/56

(54) **VERFAHREN UND VORRICHTUNG ZUR ANSTEUERUNG EINER ELEKTRISCH BETÄTIGTEN VERSCHLEISSNACHSTELLEINRICHTUNG**
METHOD AND DEVICE FOR CONTROLLING AN ELECTRICALLY ACTUATED WEAR ADJUSTER
PROCEDE ET DISPOSITIF POUR COMMANDER UN MECANISME A COMMANDE ELECTRIQUE POUR UN REGLAGE EN FONCTION DE L'USURE

(30) Priorität: 03.04.2002 DE 10214669
(43) Veröffentlichungstag der Anmeldung: 05.01.2005
(73) Patentinhaber: KNORR-BREMSE Systeme für Schienenfahrzeuge GmbH, 80809 München (DE)
(72) Erfinder: WAGNER, Thomas, 81373 München (DE); BURKHART, Thomas, 80469 München (DE); FRIESEN, Ulf, 81739 München (DE); VOHLA, Manfred, 1130 Wien (AT); STALTMEIR, Josef, 80807 München (DE)
(74) Vertreter: Wiedemann, Markus
(86) Internationale Anmeldenummer: PCT/EP2003/003316
(87) Internationale Veröffentlichungsnummer: WO 2003/082651

(56) Entgegenhaltungen:
- EP-A- 0 699 846
- EP-A2- 0 995 923
- EP-B1- 0 460 376
- WO-A-01/21977
- DE-A- 19 835 550
- DE-A1- 4 224 378
- DE-A1- 19 605 987
- DE-A1- 19 731 696
- DE-A1- 19 861 109
- DE-A1- 19 910 048
- DE-C1- 19 521 401
- DE-C2- 19 755 896
- DE-U1- 9 010 026
- US-A- 5 501 305
- US-A- 6 003 640

## Beschreibung

### Stand der Technik

Die Erfindung geht aus von einem Verfahren und einer Vorrichtung zur Ansteuerung einer elektrisch betätigten Verschleißnachstelleinrichtung einer Bremszuspanneinrichtung für Fahrzeuge, gemäß den Patentansprüchen 1, 5 und 7.

In der EP 0 699 846 A2 ist eine Bremszuspanneinrichtung für Schienenfahrzeuge beschrieben, mit einem Zangenbremsgestänge für eine Scheibenbremse, welche zwischen zwei Bremsgestängeteilen einen als Druckstangensteller oder Zugstangensteller ausgebildeten, mechanisch betätigten Verschleißnachsteller als Schraubgetriebe aufweist, welcher das Belagspiel bei Belag- bzw. Bremsscheibenverschleiß konstant hält. Dies erfolgt durch eine Längenänderung des Schraubgetriebes, wobei bei Druckstangenstellern eine größer werdende Stellerlänge eine Reduzierung des Belagspiels bewirkt. Der Antrieb des bekannten Schraubgetriebes erfolgt mechanisch über ein Bremsgestänge mit einer Druckstange, die bei Überhub eines als pneumatischer Zylinder-Kolbentrieb ausgebildeten Bremsaktuators durch einen Kipphebel betätigt wird. Ein Notlösen der Bremse, d.h. ein notfallbedingter Bremskraftabbau der unter Bremskraft stehenden Bremse erfolgt über den pneumatischen Bremsaktuator. Zum hilfsfösen der nicht unter Bremskraft stehenden Bremse zu Wartungsarbeiten, beispielsweise zum Bremsbelagwechsel, wird die Gewindespindel von Hand verdreht.

Die WO 01/21977 A offenbart einen elektro-mechanischen Bremsaktuator eines Schienenfahrzeugs, bei weichem allerdings die Verschleißnachstellung nicht näher beschrieben wird.

Gemäß der DE 195 21 401 C1 wird bei einer Zuspannvorrichtung für eine Fahrzeugbremse ein Bremslüftspielsteller elektrisch angesteuert, der automatisch zu Beginn einer Bremsung zumindest einen Teil eines zwischen den Reibbelägen und dem abzubremsenden Bremsenglied vorhandenes Bremslüftspiels überwindet und nach einer erfolgten Bremsung wieder ein Bremslüftspiel einstellt.

Der vorliegenden Erfindung liegt die Aufgabe zugrunde, ein Verfahren bzw. eine Vorrichtung zur Verschleißnachstellung von Bremszuspanneinrichtungen zur Verfügung zu stellen, durch welche ein genaues und einfaches Einstellen des Belagspiels möglich ist.

Erfindungsgemäß wird diese Aufgabe durch die Merkmale der Ansprüche 1, 5 und 7 gelöst.

### Vorteile der Erfindung

Gemäß dem Verfahren von Anspruch 1 dienen gemessene Werte für den Zuspannweg und die zugeordneten Bremskraftwerte als Ausgangsbasis für die Berechnung des aktuellen Anlegehubes und des unter Umständen erforderlichen Nachstellweges. Dabei wird während einer mit höherer Bremskraft erfolgenden Betriebsbremsung mehrmals hintereinander der Bremskraftwert und der jeweils zugeordnete zurückgelegte Zuspannweg der Bremsbeläge gemessen. Mit Hilfe der hieraus gewonnenen Stützstellen lässt sich ein im wesentlichen linearer Bremskraft-Zuspannweg-Verlauf darstellen, aus welchem der aktuelle Anlegehub rechnerisch extrapoliert wird. Unter Bremsungen mit höherer Bremskraft sollen dabei Bremsungen verstanden werden, bei welchen Bremskraftwerte von mehr als 3% bis 20% eines maximal möglichen Bremskraftwertes auftreten.

Das Verfahren gemäß Anspruch 5 geht von einem vorgegebenen Soll-Anlegepunkt aus, in welchem das Belagspiel gleich Null sein sollte. Dieser Soll-Anlegepunkt wird angefahren und dann die Verschleißnachstelleinrichtung erforderlichenfalls solange betätigt bis erstmals ein gemessenes elektrisches Bremskraftsignal vorhanden und der Ist-Anlegepunkt erreicht ist. Der zurückgelegte Weg zwischen Soll-Anlegepunkt und Ist-Anlegepunkt der Bremsbeläge entspricht dann dem Nachstellweg. Das anschließende Rückstellen der Bremszuspanneinrichtung in die Lösestellung geht folglich vom Ist-Anlegepunkt aus, so dass für künftige Zuspannbewegungen das durch Verschleiß bedingte Belagspiel nicht mehr vorhanden ist.

Der Verschleißnachsteller, an welchem die erfindungsgemäßen Verfahren von Anspruch 1 und 5 sowie die erfindungsgemäße Vorrichtung von Anspruch 7 zum Einsatz kommt, ist anstatt mechanisch elektrisch betätigt, so daß der bekannte mechanische und groß bauende Betätigungsmechanismus entfällt, wodurch sich eine geringere Baugröße ergibt. Durch die erfindungsgemäßen Ansteuerverfahren und die erfindungsgemäße Vorrichtung ist außerdem ein genaueres Einstellen des Belagspiels möglich als bisher. Dadurch erhöht sich die Dynamik der Bremszuspanneinrichtung.

Durch die in den Unteransprüchen aufgeführten Maßnahmen sind vorteilhafte Weiterbildungen und Verbesserungen der Erfindung möglich.

Besonders bevorzugt erfolgt das Nachstellen des Belagspiels im nicht zugespannten Zustand der Bremszuspanneinrichtung. Dann reicht ein relativ kleiner und kostengünstiger Antrieb der Verschleißnachstelleinrichtung aus, um lediglich die für das Erzeugen eines meßbaren Bremskraftsignals notwendige Bremskraft aufzubringen.

In bevorzugter Weiterbildung des Verfahrens gemäß Anspruch 5 wird es zumindest beim Aufrüsten oder Initialisieren aus einer not- oder hilfsgelösten Stellung der Bremszuspanneinrichtung zusammen mit einem Testlauf durchgeführt.

### Zeichnungen

Ein Ausführungsbeispiel der Erfindung ist in den Zeichnungen dargestellt und in der nachfolgenden Beschreibung näher erläutert. In den Zeichnungen zeigt :
- Fig.1: eine schematische Darstellung einer elektromechanischen Bremszuspanneinrichtung mit einer elektrisch betätigten Verschleißnach- stelleinrichtung gemäß einer bevorzugten Ausführungsform;
- Fig.2: einen Längsschnitt durch die Verschleißnachstelleinrichtung von Fig.1 in auf Maximallänge ausgefahrener Stellung;
- Fig.3: die Verschleißnachstelleinrichtung von Fig.1 in auf Minimallänge eingefahrener Stellung;
- Fig.4: einen Programmablaufplan betreffend einen Verschleißnachstellvorgang mit der Verschleißnachstelleinrichtung von Fig.2;
- Fig.5: eine typische Bremskraft-Zuspannweg-Kennlinie der Bremszuspannein- richtung von Fig.1;
- Fig.6: ein Belagspiel-Zeit-Diagramm;
- Fig.7: einen Programmablaufplan betreffend ein Testlaufprogramm für die Bremszuspanneinrichtung von Fig.1.

### Beschreibung des Ausführungsbeispiels

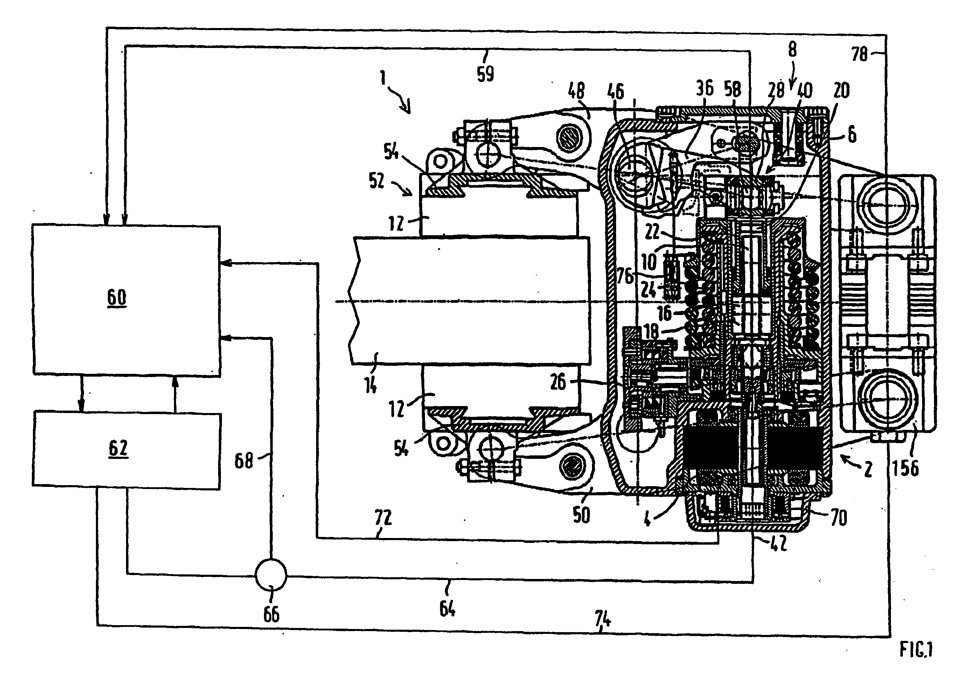

Die in Fig.1 insgesamt mit 1 bezeichnete, bevorzugte Ausführungsform einer elektromechanischen Bremszuspanneinrichtung bildet eine von mehreren Bremszuspanneinrichtungen eines Schienenfahrzeugs. Die Bremszuspanneinrichtung 1 beinhaltet einen Bremsaktuator 2 mit einer Betriebsbremseinheit und einer Speicherbremseinheit. Die Betriebsbremseinheit hat einen elektrischen Antrieb, beispielsweise einen elektrischen Stellmotor 4, der in einem Aktuatorgehäuse 6 des Bremsaktuators 2 untergebracht ist. Ein mechanischer Kraftumsetzer 8 dient zur Umsetzung der vom Bremsaktuator 2 abgegebenen Energie in eine Bremszuspannbewegung.

Der Stellmotor 4 versetzt eine koaxiale Bremsspindel 10 in Drehung, welche durch den Kraftumsetzer 8 in eine Bremszuspannbewegung von Bremsbelägen 12 in Richtung auf eine Wellenbremsscheibe 14 gewandelt werden. Der Kraftumsetzer 8 umfaßt unter anderem eine Mutter-/Spindel-Baueinheit 16 mit einer auf der Bremsspindel 10 drehbar gelagerten Spindelmutter 18, welche bei Drehung der Bremsspindel 10 Linearbewegungen in Richtung der Spindelachse 42 ausführen kann. Das vom Stellmotor 4 abgewandte Ende der Bremsspindel 10 ragt in einen zylindrischen Hohlabschnitt eines Pleuels 20 hinein, der mit der Spindelmutter 18 dreh und axialfest verbunden ist. Außerdem ist der zylindrische Hohlabschnitt des Pleuels 20 in einer Schiebehülse 22 dreh- und axialfest gehalten, auf welche wenigstens eine sich am Aktuatorgehäuse 6 abstützende Speicherfeder 24 wirkt. Die Speicherfeder 24 ist Teil der Speicherbremseinheit und dient als Energiespeicher zum Speichem und Abgeben von Energie zum Zuspannen der Bremse als betriebliche Notbremse im Sinne einer unterlegten Sicherheitsebene bei Ausfall der Betriebsbremseinheit und/oder als Park- oder Feststellbremse. Sowohl die Betriebsals auch die Speicherbremseinheit wirken auf den Pleuel 20. In Bremslösestellung ist die Speicherfeder 24 durch eine Verriegelungseinrichtung 26 in der vorgespannten Stellung gehalten.

Ein Pleuelkopf 28 des Pleuels 20 ragt aus der Schiebehülse 22 heraus und ist an einem Bremshebel 36 mittels eines Gelenks 40 senkrecht zur Spindelachse 42 angelenkt. Bei Antrieb der Bremsspindel 10 in Bremszuspannrichtung bzw. bei Lösen der Verriegelungseinrichtung 26 der Speicherfeder 24 wird aufgrund des dann axial ausfahrenden Pleuels 20 ein Gelenkbolzen des Gelenks 40 unter anderem durch im wesentlichen senkrecht zur Bolzenachse angreifende Scherkräfte beansprucht.

Das andere Ende des Bremshebels 36 wirkt auf eine Exzenteranordnung mit einer Exzenterwelle 46, die an einen Zangenhebel 48 angelenkt ist, der zusammen mit einem weiteren Zangenhebel 50 eine Bremszange 52 bildet. An den einen Enden der Zangenhebel 48, 50 sind jeweils Belaghalter 54 mit Bremsbelägen 12 angeordnet, die in Richtung der Achse der Wellenbremsscheibe 14 verschieblich sind. Die von den Bremsbelägen 12 abgewandt liegenden Enden der Zangenhebel 48, 50 sind miteinander über einen Druckstangensteller 156 verbunden, der vorzugsweise elektrisch betätigt ausgelegt ist. Die beschriebene Anordnung bildet ebenfalls einen Teil des Kraftumsetzers 8, der die vom Stellmotor 4 oder von der Speicherfeder 24 veranlaßten Ausfahrbewegungen des Pleuels 20 in eine Bremszuspannbewegung der Bremsbeläge 12 in Richtung auf die Bremsscheibe 14 wandelt.

Der Gelenkbolzen des Gelenks 40 wird vorzugsweise durch einen Scherkraftmeßbolzen 58 gebildet. Der Scherkraftmeßbolzen 58 ist mit wenigstens einem aus Maßstabsgründen nicht dargestellten Meßaufnehmer zur Messung von Größen versehen, aus welchen die an den Bremsbelägen 12 wirkende Bremskraft mittelbar oder unmittelbar ableitbar ist. In bevorzugter Ausführungsform wird der Meßaufnehmer durch Dehnmeßstreifen (DMS) gebildet, die am Umfang des Scherkraftmeßbolzens 58 vorzugsweise durch Klebung derart befestigt sind, daß sie den aufgrund der gegensinnig wirkenden Scherkräfte hervorgerufenen Scherverformungen des Scherkraftmeßbolzens 58 proportionale Signale erzeugen. Anstatt am Scherkraftmeßbolzen 58 oder zusätzlich hierzu können auch ein oder mehrere Dehnmeßstreifen am Bremshebel 36 angeordnet sein, um aus den Verformungen des Bremshebels 36 die Bremskräfte ableiten zu können.

In einer eine DMS-Brückenschaltung beinhaltenden Auswerteelektronik findet eine Umrechnung der Scherverformungssignale in Signale für die jeweils an den Bremsbelägen 12 wirkende Ist-Zuspannkraft statt, welche über eine Signalleitung 59 an eine zentrale Steuer- und Regeleinrichtung 60 weitergeleitet werden. Dort wird anhand eines Soll-Ist-Vergleichs eine Regeldifferenz zwischen einer Soll-Zuspannkraft und der Ist-Zuspannkraft berechnet. Die Bremskraft-Sollwertvorgabe orientiert sich beispielsweise am Erreichen einer geforderten Soll-Zuspannkraft in möglichst kurzer Zeit.

Die Steuer- und Regeleinrichtung 60 steuert ein Leistungsteil 62 an, welches in Abhängigkeit der berechneten Regeldifferenz einen Betriebsstrom für den Stellmotor 4 aussteuert, der durch einen an eine zwischen dem Leistungsteil 62 und dem Stellmotor 4 verlaufende elektrische Leitung 64 angeschlossenen Stromsensor 66 gemessen wird, wobei eine Rückmeldung an die Steuer- und Regeleinrichtung 60 durch ein entsprechendes, über eine Signalleitung 68 rückgeführtes Motorstromsignal erfolgt. Außer zur Einregelung einer Soll-Zuspannkraft dienen die in die Steuer- und Regeleinrichtung 60 eingesteuerten Signale für die Ist-Zuspannkräfte als Basis zur Ansteuerung des Druckstangenstellers 156 über eine elektrische Leitung 74, wobei diese Ansteuerung später noch ausführlich beschrieben wird, und die Signale für den jeweiligen Motorstrom zur Überwachung der Krafteinsteuerung und Funktionsfähigkeit der Bremszuspanneinrichtung 1 bei sicherheitsrelevanten Bremsungen. Zur Verifizierung der Meßergebnisse kann auch der antriebsseitig durch den Stromsensor 66 gemessene Motorstrom in der Steuer- und Regeleinrichtung 60 mit dem Signal für die Ist-Zuspannkraft abgeglichen werden.

Ein an dem von der Bremsspindel 10 abgewandten Ende der Motorwelle des Stellmotors 4 angeordneter Winkelencoder 70 dient zur indirekten Messung des Zuspannweges der Bremsbeläge 12 während einer Betätigung des Bremsaktuators 2 und liefert über eine Signalleitung 72 ein entsprechendes Signal an die zentrale Steuer- und Regeleinrichtung 60, welche den Drehwinkel des Stellmotors 4 in den entsprechenden Zuspannweg umrechnet. Alternativ könnte jegliche Art von Meßsystem vorgesehen sein, mit welchem der Zuspannweg der Bremsbeläge 12 direkt oder indirekt meßbar ist, beispielsweise ein absolutes Wegmeßsystem. Mit Hilfe eines Endschalters 76 wird der Lösezustand des Bremsaktuators 2 detektiert und an die zentrale Steuer- und Regeleinrichtung 60 gemeldet.

Die Bremszuspanneinrichtung 1 ist vorzugsweise zur Erzeugung von lastkorrigierten und/oder schlupfgeregelten Bremskräften ausgebildet, wobei unter einer lastkorrigierten Bremskraft eine im wesentlichen an das jeweils vorliegende Gewicht des Schienenfahrzeugs angepaßte Bremskraft und unter einer schlupfgeregelten Bremskraft eine Bremskraft verstanden werden soll, durch welche die Bremsung mit idealem Radschlupf erfolgt (Gleitschutzregelung). Hierzu weist Steuer- und Regeleinrichtung 60 entsprechende Regelfunktionen auf. Weiterhin ist die zentrale Steuer- und Regeleinrichtung 60 elektronische Moduln auf, um den Druckstangensteller 156 anzusteuem, der in Fig.1 lediglich in einer Draufsicht dargestellt ist. Der Druckstangensteller 156 dient zur Verschleißnachstellung, um den im Betrieb auftretenden Verschleiß der Bremsbeläge 12 und der Bremsscheibe 14 zu kompensieren. Anstatt eines Druckstangenstellers 156 könnte auch ein Zugstangensteller mit entsprechend angepaßtem Kraftumsetzer 8 vorgesehen sein.

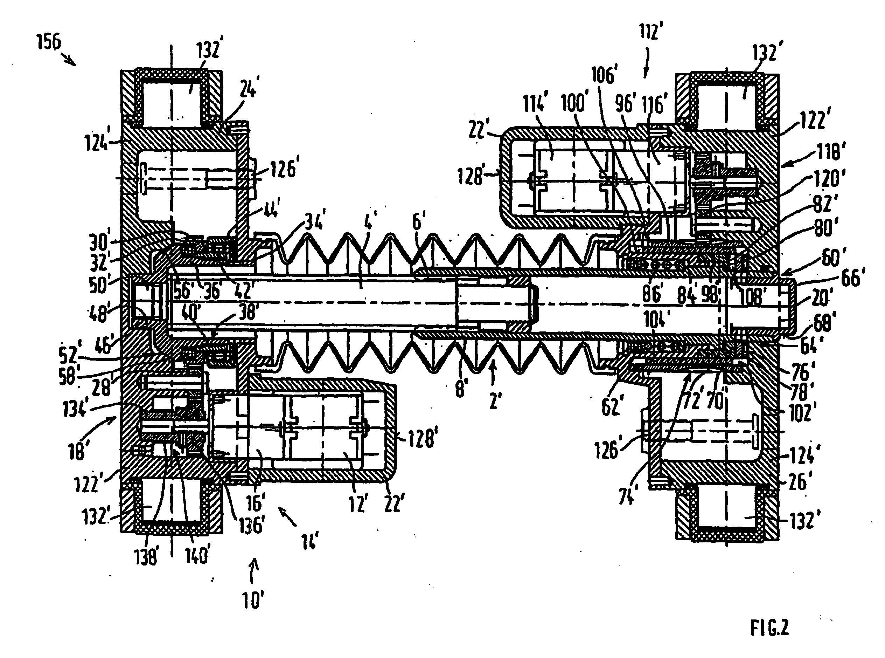

In der in Fig.2 dargestellten Ansicht ist der Druckstangensteller 156 in auf Maximallänge ausgefahrener Position gezeigt, in welcher der Nachstellweg maximal ist, da eine Verlängerung des Druckstangenstellers 156 über die Anlenkung der Zangenhebel 48, 50 eine Verringerung des Abstandes der Bremsbeläge 12 von der Bremsscheibe 14 nach sich zieht und umgekehrt.

Der Druckstangensteller 156 beinhaltet ein Schraubgetriebe 2', das als Verschraubungsteile eine Gewindespindel 4' und eine auf dieser mittels eines Trapezgewindes 6' verschraubbare, als rohrartiges Teil ausgeführte Mutter 8' aufweist. Das Trapezgewinde 6' ist vorzugsweise nicht-selbsthemmend. Zum Verschleißnachstellen ist der Druckstangensteller 156 elektrisch betätigt ausgelegt, wofür eine elektrische Antriebseinheit 10' bestehend aus einem Elektromotor 12' mit nachgeordnetem Getriebe 14' vorgesehen ist, dessen Getriebeausgang vorzugsweise mit der Spindel 4' drehgekoppelt ist. Alternativ könnte zum Verschleißnachstellen auch die Mutter 8' oder die Spindel 4' und die Mutter 8' elektrisch betätigt ausgeführt sein.

Der Elektromotor wird beispielsweise durch einen Gleichstrommotor 12' und das Getriebe 14' durch ein sich dem Gleichstrommotor 12' axial anschließendes Planetengetriebe 16' sowie eine diesem nachgeordnete Zahnradstufe 18' gebildet. Der Gleichstrommotor 12', das Planetengetriebe 16' und die Zahnradstufe 18' sind parallel und mit radialem Abstand zu einer Mittelachse 20' des Schraubgetriebes 2' angeordnet und in einem Antriebsgehäuse 22' untergebracht, welches an ein in Fig.2 linkes Gehäuseteil 24' des Druckstangenstellers 156 angeflanscht ist, an welchem der linke Zangenhebel 50 der Bremszange 52 (Fig.1) angelenkt ist. Dem linken Gehäuseteil 24' liegt in Axialrichtung des Schraubgetriebes 2' gesehen ein rechtes Gehäuseteil 26' gegenüber, an welchem der rechte Zangenhebel 48 der Bremszange 52 (Fig.1) angelenkt ist. Das linke Gehäuseteil 24' und das rechte Gehäuseteil 26' des Druckstangenstellers 156 sind durch das Schraubgetriebe 2' aneinander abstandsveränderlich gehalten, indem durch Verlängern des Schraubgetriebes 2' bzw. des Druckstangenstellers 156 eine Verschleißnachstellung erfolgen und das sich im Laufe der Zeit vergrößernde Belagspiel zwischen den Bremsbelägen 12 und der Bremsscheibe 14 wieder verkleinert und auf einem konstanten Wert gehalten werden kann.

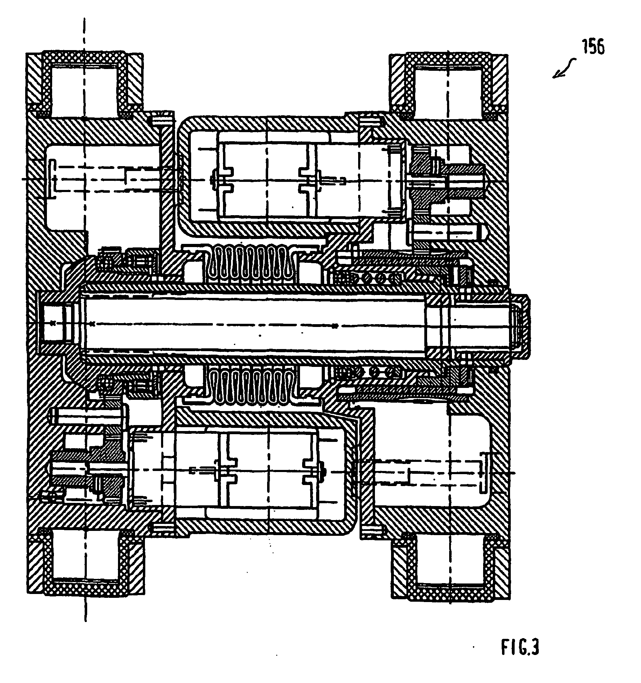

Das getriebeausgangsseitige Zahnrad 28' der Zahnradstufe 18' kämmt mit einem spindelseitigen Zahnrad 30', welches durch ein Rillenkugellager 32' auf einem zylindrischen Fortsatz 34' einer Konushülse 36' koaxial drehbar gelagert ist. Durch eine auf der zum rechten Gehäuseteil 26' weisenden Seite des spindelseitigen Zahnrads 30' angeordnete Rutschkupplung 38' ist die elektrische Antriebseinheit 10' mit der Konushülse 36' gekoppelt. Die Rutschkupplung 38' beinhaltet durch definierten Federdruck in an der Stirnfläche des spindelseitigen Zahnrades 30' ausgebildete Rillen vorgespannte Kugeln 40', welche in Bohrungen 42' eines auf dem zylindrischen Fortsatz 34' der Konushülse 36' drehfest gehaltenen Rings 44' geführt sind. Bei Drehmomenten, welche größer als ein definiertes Rutschmoment sind, wird der durch die in die Rillen gedrückten Kugeln 40' gebildete Formschluß überwunden und die Kupplung 38' rutscht durch, wodurch die elektrische Antriebseinheit 10' von der Spindel 4' entkoppelt wird. Das Rutschmoment kann durch geeignete Wahl der Federparameter und der Kugel-Rillen-Geometrie an die gerade vorliegenden Erfordernisse angepaßt werden. Im vorliegenden Fall rutscht die Kupplung 38' durch, wenn die Bremszuspanneinrichtung Anschlagpositionen erreicht, wie beispielsweise die Position, in welcher die Bremsbeläge 12 an der Bremsscheibe 14 zum Anliegen kommen oder die Position, in welcher der Druckstangensteller 156 auf Minimallänge (Fig.3) verkürzt und die Spindel 4' vollständig in die Mutter 8' eingeschraubt ist.

Das vermittels der Rutschkupplung 38' auf den Ring 44' übertragene Antriebsmoment wird in die Konushülse 36' eingeleitet, an deren Boden ein zapfenförmiger Fortsatz 46' vorhanden ist, dessen radial äußere Fläche eine Lagerfläche eines Gleitlagers 48' bildet, die in einer ihr zugeordneten gehäuseseitigen Lagerfläche gleit- und drehbar gelagert ist. Das Gleitlager 48' dient als in Fig.2 linksseitige Lagerstelle der Spindel 4', welche ihrerseits mit einem endseitigen Gewindezapfen 50' in ein im Fortsatz 46' der Konushülse 36' vorhandenes Innengewinde eingeschraubt und dort drehfest gehalten ist. Infolgedessen kann die Konushülse 36' das über die Rutschkupplung 38' eingeleitete Antriebsmoment auf die Spindel 4' übertragen.

Der elektrischen Antriebseinheit 10' ist eine Konuskupplung 52' vorgeordnet, welche wenigstens zwei durch Reibung gegeneinander zum Stillstand bringbare, in Axialrichtung gesehen schräg angeordnete Konusflächen 56', 58' beinhaltet, wobei eine der Konusflächen 56' am linken Gehäuseteil 24' und die andere Konusfläche 58' an der mit der Spindel 4' verschraubten Konushülse 36' ausgebildet ist. Wenn die Spindel 4' unter Axiallast gesetzt ist, werden die beiden Konusflächen 56', 58' in Richtung der konischen Verengung aneinander gepreßt, wodurch die jeweils eingenommene Drehstellung der Spindel 4' durch Reib- oder Kraftschluß fixiert und die Axiallast vom linken Gehäuseteil 24' abgestützt wird. Insbesondere wird eine Weiterleitung der Axiallast als Drehmoment zur elektrischen Antriebseinheit 10' verhindert. Wenn hingegen keine Axiallast vorhanden ist, befindet sich die Konuskupplung 52' in gelöstem Zustand und die Konushülse 36' kann zusammen mit der Spindel 4' gegenüber dem linken Gehäuseteil 24' frei drehen.

Die rohrartige Mutter 8' ragt in eine gestufte Durchgangsöffnung 60' des rechten Gehäuseteils 26' und ist dort vermittels eines Rillenkugellagers 62' drehbar aber gegenüber dessen Innenring axial verschieblich gelagert. Im vom linken Gehäuseteil 24' weg weisenden Ende der Mutter 8', das mit seinem Außenumfang gleitend an einer in der Durchgangsöffnung 60' des rechten Gehäuseteils 26' aufgenommenen Dichtung 64' anliegt, ist eine Hülse 66' dreh- und axialfest gehaltert, deren aus der Durchgangsöffnung 60' ragendes Ende mit einer Ansatzfläche 68' für ein Schraubwerkzeug versehen ist. Die Mutter 8' ist außerdem durch eine Rutschkupplung 70' mit einer koaxialen Freilaufhülse 72' eines sperrbaren Freilaufs 74' gekoppelt, welche einerseits auf der Mutter 8' axial verschieblich gehalten ist und sich andererseits über ein vorzugsweise als Axialnadellager ausgeführtes Axiallager 76' gegen eine radiale Wandung 78' des rechten Gehäuseteils 26' abstützt. Hierdurch wird die Mutter 8' axial gelagert.

Die Rutschkupplung 70' wird vorzugsweise durch zwei miteinander durch Federdruck in Axialrichtung kämmende Stimplanverzahnungen 80', 82' gebildet, wobei die eine Stirnplanverzahnung 80' an einem radial äußeren Ringkragen des in das rechte Gehäuseteil 26' ragenden Endes der Mutter 8' und die andere Stimplanzahnung 82' an der radial inneren Umfangsfläche der Freilaufhülse 72' ausgebildet ist.

Die Mutter 8' wird mittels einer sich einendseitig am Rillenkugellager 62' und anderendseitig an einem äußeren Absatz 84' der Mutter 8' abstützenden Schraubenfeder 86' gegen die Freilaufhülse 72' vorgespannt, so daß die beiden Stimplanverzahnungen 80', 82' miteinander in Eingriff stehen. Bei Überschreiten eines Rutschmoments geraten die beiden Stimplanverzahnungen 80', 82'. unter axialer Verschiebung der Mutter 8' in Richtung auf das linke Gehäuseteil 24' außer Eingriff, wodurch sich die Mutter 8' gegenüber der Freilaufhülse 72' drehen kann. Das Rutschmoment der Rutschkupplung 70' ist durch geeignete Wahl der Federparameter und der Stimplanverzahnungen 80', 82' anpaßbar.

Im rechten Gehäuseteil 26' ist eine elektrische Antriebseinheit 112' zum Notlösen und/oder Hilfslösen der Bremszuspanneinrichtung 1 aufgenommen, wobei unter "Notlösen" ein Bremskraftabbau der unter Bremskraft stehenden Bremszuspanneinrichtung 1 beispielsweise bei Versagen des Bremsaktuators 2 und unter "Hilfslösen" ein Lösen der nicht unter Bremskraft stehenden Bremse zu Wartungsarbeiten, beispielsweise zum Bremsbelagwechsel verstanden werden soll.

Die elektrische Antriebseinheit 112' besteht aus einem vorzugsweise als Gleichstrommotor 114' ausgeführten Elektromotor, einem Planetengetriebe 116' sowie einer Zahnradstufe 118', so daß die beiden elektrischen Antriebseinheiten 10', 112' vorzugsweise identisch aufgebaut sind. Das getriebeausgangseitige Zahnrad 120' der Zahnradstufe 118' kämmt mit einer mit dem Schraubgetriebe 2' koaxialen Zahnhülse 96', welche im rechten Gehäuseteil 26' drehbar aufgenommen ist und zu einer mit der radial äußeren Umfangsfläche 98' der Freilaufhülse 72' bündigen und sich dieser axial anschließenden Gehäusefläche 100' durch einen Ringraum 102' radial beabstandet ist. Im Ringraum 102' ist eine zur Mittelachse 20' des Schraubgetriebes 2' koaxiale Schlingfeder 104' mit zwei in radialer Richtung gegenläufig abgebogenen zapfenartigen Enden 106', 108' aufgenommen, wobei ein Ende 106' in einer radialen Durchgangsbohrung der Zahnhülse 96' und das andere Ende 108' in einer radialen Durchgangsbohrung der Freilaufhülse 72' formschlüssig gehalten ist.

Die Zahnhülse 96', die Schlingfeder 104', die Freilaufhülse 72' und die Gehäusefläche 100' bilden zusammen einen sperrbaren Freilauf als Schlingfederfreilauf 74', welcher die elektrische Antriebseinheit 112' mit der Mutter 8' koppelt. Genauer ist der Schlingfederfreilauf 74' einerseits zur Drehung der Mutter 8' mittels der elektrischen Antriebseinheit 112' in einer Richtung gegen die Verschleißnachstellung und andererseits zur Sperrung dieser Drehung ausgebildet, wenn die Drehung der Mutter 8' nicht von der elektrischen Antriebseinheit 112' veranlaßt wird. Der Mutter 8' und dem Schlingfederfreilauf 74' ist die bereits oben beschriebene Rutschkupplung 70' zwischengeordnet.

Die beiden elektrischen Antriebseinheiten 10', 112' sind bezogen auf einen gedachten Schnittpunkt der Mittelachse 20' des Schraubgetriebes 2' und einer gedachten vertikalen Mittellinie des Druckstangenstellers 156 im wesentlichen zueinander punktsymmetrisch angeordnet, wobei sie ausgehend vom Ende der Spindel 4' bzw. der Mutter 8' aufeinander zu weisen. Genauer ragt die Antriebseinheit 10' zum Verschleißnachstellen im wesentlichen vom antriebsseitigen Ende der Spindel 4' in Richtung auf die Antriebseinheit 112' zum Not- und Hilfslösen und letztere im wesentlichen vom antriebsseitigen Ende der Mutter 8' in Richtung auf die Antriebseinheit 10' zum Verschleißnachstellen. Beide Antriebseinheiten 10', 112' betätigen ein einziges Schraubgetriebe 2' zum kombinierten Verschleißnachstellen und Not- bzw. Hilfslösen.

Das rechte und linke Gehäuseteil 24', 26' besteht jeweils aus bezogen auf die Mittelachse 20' des Schraubgetriebes 2' im wesentlichen symmetrischen Gehäuseabschnitten 122', 124', wobei in jeweils einem Gehäuseabschnitt 122' die Antriebseinheit 10', 112' und in dem auf der anderen Seite der Mittelachse 20' angeordneten Gehäuseabschnitt 124' je ein Endlagensensor 126' aufgenommen ist, welcher einer stirnseitigen Fläche 128' des Antriebsgehäuses 22' der jeweils anderen elektrischen Antriebseinheit 10', 112' gegenüberliegt. Die Endlagensensoren sind vorzugsweise in Form von mechanischen Endlagenschaltern 126' ausgebildet, welche jeweils durch Anlage der stimseitigen Fläche 128' des Antriebsgehäuses 22' der gegenüberliegenden Antriebseinheit 10', 112' betätigt und ein Signal zum Erreichen der in Fig.3 dargestellten Position, in welcher der Druckstangensteller 156 auf Minimallänge eingefahren ist, über eine weitere Signalleitung 78 an die zentrale Steuer- und Regeleinrichtung 60 (Fig.1) liefern, woraufhin die jeweils betätigte Antriebseinheit 10', 112' stromlos geschaltet wird. Die beiden Gehäuseabschnitte 122', 124' eines jeden Gehäuseteils 24', 26' sind an ihren voneinander weg weisenden Enden mit jeweils einer Aufnahme 132' für Bolzen versehen, durch welche an jedes Gehäuseteil 24', 26' je ein Zangenhebel 48, 50 der Bremszange 52 angelenkt ist.

Ferner ist auf einem zylindrischen Fortsatz 134' des planetengetriebeseitigen Zahnrades 136' der der Antriebseinheit 10' zum Verschleißnachstellen zugeordneten Zahnradstufe 18' eine Schlingfeder 138' eines weiteren Schlingfederfreilaufs 140' angeordnet, welcher eine Drehung dieses Zahnrades 136' in Richtung gegen die Verschleißnachstellung sperrt und es in der Gegendrehrichtung freilaufen läßt.

Aufgrund des beschriebenen Aufbaus des Druckstangensteller 156 kann durch ein einziges Schraubgetriebe 2', von welchem je ein Verschraubungsteil mit einer separaten, von der anderen Antriebseinheit unabhängigen Antriebseinheit gekoppelt ist, nämlich einerseits die Spindel 4' mit der einen elektrischen Antriebseinheit 10' und andererseits die Mutter 8' mit der weiteren elektrischen Antriebseinheit 112', sowohl der Bremsbelagverschleiß korrigiert als auch die Bremse not- und/oder hilfsgelöst werden.

Vor diesem Hintergrund ist die Funktionsweise des Druckstangenstellers 156 wie folgt :

Das Verschleißnachstellen, d.h. die Verkleinerung des zwischen den Bremsbelägen 12 und der Bremsscheibe 14 vorhandenen und durch Verschleiß zu groß gewordenen Belagspiels erfolgt vorzugsweise in der bremskraftfreien Bremslösestellung. Hierzu wird der Gleichstrommotor 12' der zum Verschleißnachstellen vorgesehenen elektrischen Antriebseinheit 10' durch die zentrale Steuer- und Regeleinheit 60 über eine vorbestimmte Zeit angesteuert und versetzt die Spindel 4' über die bei einem gegenüber dem Rutschmoment kleineren Antriebsmoment geschlossene Rutschkupplung 38' in einer Drehrichtung in Drehbewegung, in welcher sich die Spindel 4' aus der Mutter 8' herausschraubt und dadurch den Druckstangensteller 156 verlängert, was in einer Verringerung des Belagspiels resultiert. Fig.2 zeigt den Druckstangensteller 156 in auf Maximallänge ausgefahrener Position. Da das Schraubgetriebe 2' hierbei nur durch sehr geringe Axialkräfte belastet wird, befindet sich die Konuskupplung 52' in gelöster Stellung, so daß sich die Spindel 4' frei drehen kann. Der mutterseitige Schlingfederfreilauf 74' sperrt ein Mitdrehen der an sich nicht verdrehgesicherten Mutter 8', da eine Drehung der Mutter 8' über die Rutschkupplung 70' auf die Freilaufhülse 72' und von dort auf die Schlingfeder 104' übertragen wird, welche sich daraufhin zuzieht und eine reibschlüssige Verbindung zwischen der Freilaufhülse 72' und der Gehäusefläche 100' schafft, wodurch die Mutter 8' am rechten Gehäuseteil 26' drehfest abgestützt ist.

Während einer Bremsung könnte die aus der an den Bremsbelägen 12 vorhandenen Bremskraft resultierende und über die gelenkig gelagerten Zangenhebel 48, 50 der Bremszange 52 auf den Druckstangensteller 156 übertragene und dort in axialer Richtung wirkende Reaktionsdruckkraft nicht am Schraubgetriebe 2' abgestützt werden, da das Trapezgewinde 6' zwischen Spindel 4' und Mutter 8' nicht-selbsthemmend ausgeführt ist. Folglich würde sich der Druckstangensteller 156 unter dem Einfluß der axialen Druckkraft verkürzen und somit ein unerwünschter Verlust an Bremskraft hervorgerufen werden. Indes schließt die Konuskupplung 52' unter der Wirkung der Axiallast durch Zusammenpressen der einander zugeordneten Konusflächen 56', 58' reibschlüssig und stellt eine drehfeste Verbindung zwischen der Spindel 4' und dem linken Gehäuseteil 24' her. Zum andem bleibt die als Stirnplanverzahnung 80', 82' ausgeführte mutterseitige Rutschkupplung 70' unter Axiallast geschlossen und überträgt das Reaktionsmoment auf die Schlingfeder 104', welche sich daraufhin zuzieht und das Reaktionsmoment am rechten Gehäuseteil 26' abstützt. Infolgedessen kann während eines Bremsvorgangs keine Verkürzung des Druckstangenstellers 156 und somit kein ungewollter Bremskraftverlust eintreten.

Falls bei dem in Fig.1 gezeigten Bremsaktuator 2 oder in seiner Ansteuerung ein Fehler auftritt, der dazu führt, daß der Bremsaktuator 2 die unter Bremskraft stehende Bremse nicht mehr lösen kann, muß diese notgelöst werden. Zum Notlösen der Bremse wird vorzugsweise von einem Führerstand der S- oder U-Bahn aus die elektrische Antriebseinrichtung 112' zum Not- und/oder Hilfslösen durch die Steuer- und Regeleinrichtung 60 angesteuert und zwar in einer Drehrichtung, in welcher die Schlingfeder 104' aufgeweitet und hierdurch der zuvor vorhandene Reibschluß zwischen der Freilaufhülse 72' und der Gehäusefläche 100' aufgehoben wird, wodurch der Mutter 8' ein freier Lauf in dieser Drehrichtung möglich ist. Infolgedessen kann die Schlingfeder 104' die in sie über die Zahnhülse 96' eingeleitete Drehbewegung auf die Freilaufhülse 72' übertragen, von welcher die Drehung über die geschlossene, weil nicht überlastete Rutschkupplung 70' an die nun frei laufende Mutter 8' weitergeleitet wird, wodurch sich der Druckstangensteller 156 verkürzt und Bremskraft abgebaut wird. Hierdurch kann der Druckstangensteller 156 bis auf die in Fig.3 dargestellte Minimallänge verkürzt werden, in welcher die Mutter 8' stimseitig den Boden der Konushülse 36' kontaktiert und die Endlagenschalter 126' betätigt werden, wobei ein entsprechendes Signal an die zentrale Steuer- und Regeleinrichtung 60 geleitet wird.

Falls die Bremse zu Wartungsarbeiten in eine Stellung gebracht werden soll, in welcher sich die Bremsbeläge 12 in maximaler Entfernung zur Bremsscheibe 14 befinden, beispielsweise zum Wechsel der Bremsbeläge 12, so kann das Lösen der Bremse ebenfalls über die elektrische Antriebseinheit 112' zum Not- und/oder Hilfslösen in der oben beschriebenen Weise erfolgen (Hilfslösen). Da jedoch das mittels der durch das Antriebsmoment aufgeweiteten und auf Biegung beanspruchten, mutterseitigen Schlingfeder 104' übertragbare Drehmoment begrenzt ist, wird in den Fällen, in welchen das Schraubgetriebe 2' schwergängig ist, beispielsweise bei Vereisung, die Mutter 8' zum Verkürzen des Druckstangenstellers 156 direkt verdreht. Dies erfolgt im bremskraftfreien Zustand durch Ansetzen eines Schraubwerkzeugs an der Ansatzfläche 68' der mit der Mutter 8' drehfest verbundenen Hülse 66', wobei diese manuell in einer Richtung gedreht, in welcher sich der Druckstangensteller 156 bis auf die in Fig.3 gezeigte Minimallänge verkürzt. Das Drehmoment muß dabei so groß sein, daß die zwischen der Freilaufhülse 72' und der Mutter 8' angeordnete Rutschkupplung 70' durchrutschten kann, während die Schlingfeder 104' des Schlingfederfreilaufs 74' die Freilaufhülse 72' in dieser Richtung sperrt. Hierbei wird die Mutter 8' von der Freilaufhülse 72' weg soweit in axialer Richtung verschoben, daß die beiden Stirnplanverzahnungen 80', 82' außer Eingriff geraten.

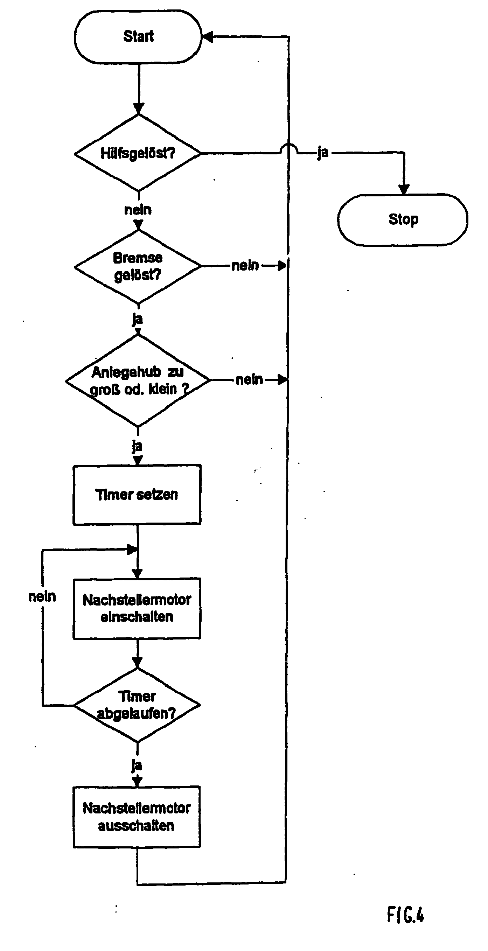

Um ein Soll-Belagspiel zwischen den Bremsbelägen 12 und der Bremsscheibe 14 im Rahmen der bereits beschriebenen Verschleißnachstellung einzustellen, wird der Druckstangensteller 156 von der zentralen Steuer- und Regeleinrichtung 60 gemäß dem in Fig.4 gezeigten Programmablaufplan wie folgt angesteuert:

Zunächst wird durch Vorhandensein oder Nichtvorhandensein von Signalen der Endschalter 126' festgestellt, ob sich die Bremszuspanneinrichtung 1 in hilfs- oder notgelöster Stellung befindet, was in Fig.4 durch die Verzweigung "Hilfsgelöst ?" veranschaulicht ist. Falls dies der Fall ist, wird das Programm gestoppt. Falls nicht, so wird gemäß einer weiteren Verzweigung "Bremse gelöst ?" abgefragt, da die Verschleißnachstellung vorzugsweise nur in Lösestellung oder im nicht zugespannteh Zustand der Bremse erfolgen soll. Bei gelöster Bremse, bei welcher der Endschalter 76 ein entsprechendes Signal erzeugt, wird mit dem nächsten Programmschritt fortgefahren, eine nicht gelöste Bremse verursacht demzufolge eine Rückkehr zum Programmstart.

Zuvor wurde der aktuelle Anlegehub der Bremsbeläge 12 an die Bremsscheibe 14 während einer vorangegangenen Betriebsbremsung ermittelt, indem der von den Bremsbelägen 12 durchlaufene Zuspannweg und ein diesem Zuspannweg zugeordneter Bremskraftwert gemessen wurde. Zur Messung des Zuspannweges dient vorliegend der Winkelencoder 70, welcher den Drehwinkel des Stellmotors 4 während der Betriebsbremsung mißt und ein entsprechendes Signal an die Steuer- und Regeleinrichtung 60 leitet. Beispielsweise entspricht bei der vorliegenden Anordnung 1 mm Zuspannweg ungefähr 6 mm Spindelweg oder 3 Umdrehungen des Stellmotors 4. Die Steuer- und Regeleinheit 60 erhält andererseits auch das dem gemessenen Zuspannweg zugeordnete Kraftsignal von dem mit dem Dehnmeßstreifen versehenen Scherkraftmeßbolzen 58. Aus den beiden Meßwerten - dem Zuspannweg einerseits und dem diesem zugeordneten Bremskraftwert andererseits - wird vorzugsweise abhängig von der Höhe des Bremskraftwertes der aktuelle Anlegehub wie folgt berechnet:

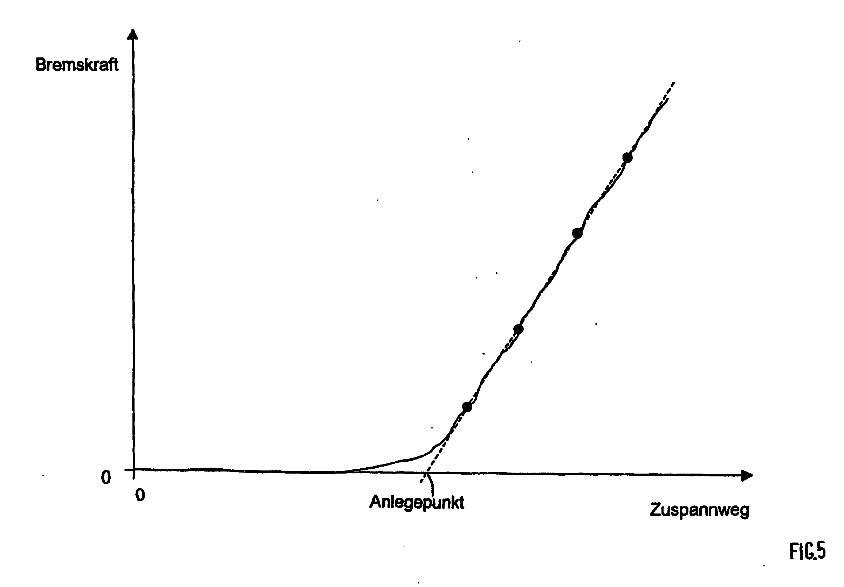

Während einer mit höherer Bremskraft erfolgenden Betriebsbremsung werden mehrmals hintereinander der Bremskraftwert und der jeweils zugeordnete zurückgelegte Zuspannweg der Bremsbeläge 12 gemessen, um Stützstellen zur Verfügung zu stellen, aus welchen die Steuer- und Regeleinheit 60 eine theoretische lineare Bremskraft-Zuspannweg-Kennlinie berechnet, welche in Fig.5 als mit gestrichelten Linien gezeichnete Gerade dargestellt ist. Man erkennt, daß der tatsächliche und mit durchgezogener Linie gezeichnete Verlauf sich für höhere Bremskräfte mit der theoretischen Geraden deckt, wobei unter Bremsungen mit höherer Bremskraft Bremsungen verstanden werden, bei welchen Bremskraftwerte von vorzugsweise ungefähr mehr als 3% bis 20% eines maximal möglichen Bremskraftwertes auftreten. Durch Extrapolation wird die theoretische und lineare Bremskraft-Zuspannweg-Kennlinie zu sehr kleinen Bremskraftwerten fortgesetzt, bis hin zu einem berechneten Schnittpunkt mit der Abszisse, welcher dem Anlegepunkt der Bremsbeläge 12 an die Bremsscheibe 14 entspricht. Dieser Anlegepunkt ist dadurch charakterisiert, daß nach Zurücklegen des Anlegehubs der Bremsbeläge 12 an die Bremsscheibe 14 erstmals ein Bremskraftwert vom Scherkraftmeßbolzen 58 detektiert werden kann. Der aktuelle Anlegehub der Bremsbeläge 12 ergibt sich dann aus dem Abszissenwert dieses Anlegepunktes durch entsprechende Berechnung mittels der Steuer -und Regeleinrichtung 60.

Wie man anhand Fig.5 erkennt, ist der Verlauf der tatsächlichen Bremskraft-Zuspannweg-Kennlinie bei geringen Bremskräften nicht linear, so daß in diesem Bereich eine Extrapolation mit hinreichender Genauigkeit schwierig ist. Unter Bremsungen mit geringer Bremskraft werden Bremsungen verstanden, bei welchen Bremskraftwerte von ungefähr kleiner gleich 3% bis 20 % eines maximal möglichen Bremskraftwertes auftreten. Während einer solchen Bremsung werden vorzugsweise lediglich der erstmalig auftretende Bremskraftwert und der zugeordnete zurückgelegte Zuspannweg der Bremsbeläge zur Bestimmung des aktuellen Anlegehubes herangezogen. Dies bedeutet, daß bei erstmaligem Ansprechen des Scherkraftmeßbolzens 58 als Bremskraftsensor der bis dahin zurückgelegte Zuspannweg gespeichert und hieraus eine Berechnung des aktuellen Anlegehubes erfolgt.

Die Steuer- und Regeleinheit 60 ist ausgebildet, um den ermittelten aktuellen Anlegehub mit einem vorgegebenen Soll-Anlegehub oder einem Soll-Anlegehub-Toleranz-Bereich zu vergleichen, was in Fig.4 durch die Verzweigung "Anlegehub zu groß oder zu klein?" veranschaulicht ist. Falls der aktuelle Anlegehub vom Soll-Anlegehub oder vom Soll-Anlegehub-Toleranz-Bereich abweicht, wird der erforderliche Nachstellweg aus der Differenz dieser Werte berechnet, und falls nicht, kehrt das Programm wieder zum Programmstart zurück. Anschließend wird die Antriebseinheit 10' zum Verschleißnachstellen des Druckstangenstellers 156 in Abhängigkeit des berechneten Nachstellweges angesteuert. Dies kann beispielsweise dadurch erfolgen, daß die Antriebseinheit 10' für eine vom berechneten Nachstellweg abhängige Zeit betätigt wird, was in Fig.4 durch die Operation "Timer setzen" bezeichnet ist, da die Zeit-Nachstellweg-Beziehung aus den Größen Drehzahl des Gleichstrommotors 12' und dem Übersetzungsverhältnis des Getriebes 14' bekannt und in einem Speicher der Steuer- und Regeleinrichtung 60 abgespeichert ist. Falls die dem erforderlichen Nachstellweg zugeordnete Betätigungszeit abgelaufen ist, was durch die Verzeigung "Timer abgelaufen ?" abgefragt wird, wird die Antriebseinheit 10' deaktiviert und das Programm kehrt zum Start zurück.

Gemäß einer alternativen Vorgehensweise wird zunächst die Bremszuspanneinrichtung 1 durch Bestromung des Stellermotors 4 betätigt, bis die Bremsbeläge 12 eine Stellung erreicht haben, welche einem vorgegebenen Soll-Anlegepunkt entspricht. Dieser Soll-Anlegepunkt der Bremsbeläge 12 weicht bei Vorliegen von Verschleiß vom tatsächlichen Anlegepunkt ab, als die in den Soll-Anlegepunkt gefahrenen Bremsbeläge 12 noch einen lichten Abstand von der Bremsscheibe 14 aufweisen, welcher gerade dem nachzustellenden Verschleiß entspricht. Anschließend wird die Antriebseinheit 10' zum Verschleißnachstellen aktiviert bis der Scherkraftmeßbolzen 58 erstmals ein Bremskraftsignal detektiert, wodurch genau der Verschleißweg kompensiert wird. Abschließend findet die Rückstellung des Bremsaktuators 2 in Lösestellung statt.

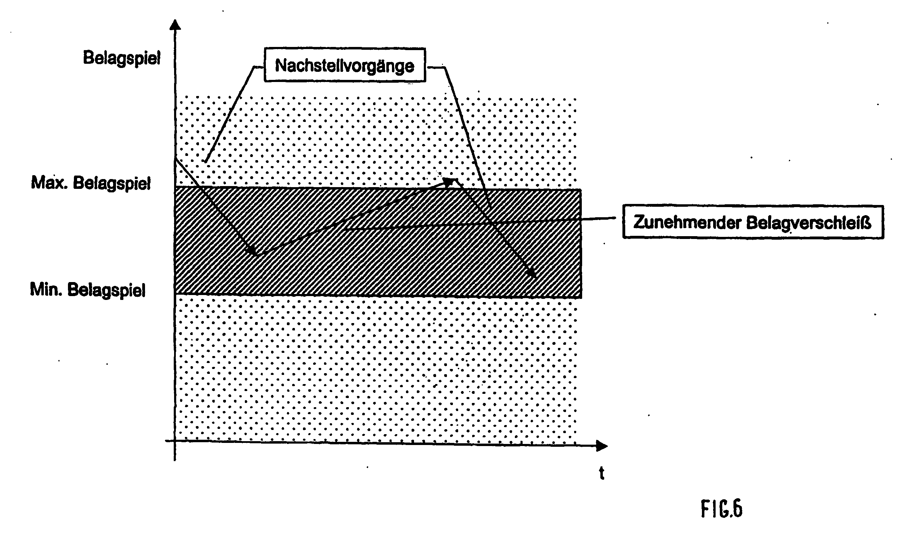

Das zulässige Belagspiel bzw. der zulässige Verschleiß kann innerhalb einer gewissen Toleranz zugelassen werden, wie durch Fig.6 veranschaulicht wird, wo der Toleranzbereich zwischen einem maximal zulässigen Belagspiel und einem minimal zulässigen Belagspiel in schraffierten Linien dargestellt ist. Demzufolge finden nur dann Nachstellvorgänge statt, falls das aktuelle Verschleiß oder das aktuelle Belagspiel entweder oberhalb des maximal zulässigen Belagspiels oder unterhalb des minimal zulässigen Belagspiels liegt. Im durch die Pfeile veranschaulichten Beispiel gemäß Fig.6 liegt der Verschleiß zur Zeit t=0 oberhalb des maximal zulässigen Belagspiels, so daß wie oben beschrieben nachgestellt wird. Mit zunehmender Zeit t, d.h. mit steigender Anzahl von Betriebsbremsungen vergrößert sich der Verschleiß zwangsläufig. Wenn er dann wiederum das maximal zulässige Belagspiel überschreitet, wird abermals nachgestellt. Der beschriebene Wechsel zwischen Verschleißentstehung und Nachstellvorgang wiederholt sich dann solange bis die Bremsbeläge 12 bzw. die Bremsscheibe 14 an der Verschleißgrenze angelangt sind und gewechselt werden müssen. Dann kann der Fall auftreten, daß das Belagspiel zu klein ist, so daß die Nachstellung in der entgegensetzten Richtung, beispielsweise durch inversen Antrieb der Antriebseinheit 10' erfolgt.

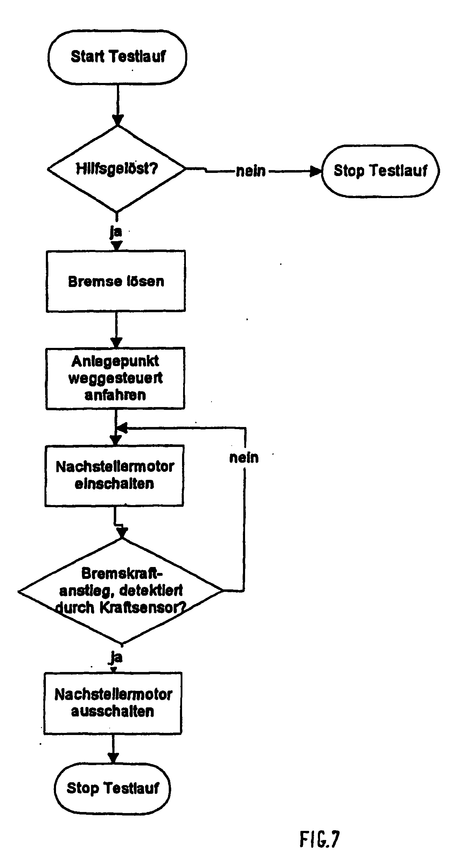

Eine not- oder hilfsgelöste Bremse, beispielsweise nach einem Bremsbelagwechsel wird durch eine Betätigung der Endschalter 126' (Fig.2) erkannt. Vorzugsweise findet ein Verschleißnachstellvorgang während jeder Initialisierung der Bremse bei Inbetriebnahme nach einem Not- oder Hilfslösevorgang statt und besonders bevorzugt während eines im Rahmen der Initialisierung stattfindenden Testlaufs, dessen fehlerloser Durchlauf eine Bedingung für den folgenden Betrieb der Bremse ist. Fig.7 zeigt den Programmablaufplan des Testlaufs. Zunächst wird an der Verzweigung "Hilfsgelöst ?" festgestellt, ob der Bremsaktuator 2 sich in not- oder hilfsgelöstem Zustand befindet, was durch das Vorliegen oder Nicht-Vorliegen eines Signals des Endschalter 126' erkannt wird. Bei hilfs- oder notgelöster Bremse wird der Bremsaktuator 2 gemäß der folgenden Operation "Bremse lösen" durch Betätigung des Stellmotors 4 gelöst, um über die hieraus resultierende Betätigung des Endschalters 76 eine Referenz zur anschließenden Zuspannwegmessung zu erhalten. Anschließend wird wie bei der oben beschriebenen alternativen Vorgehensweise zunächst die Bremszuspanneinrichtung 1 durch Bestromung des Stellmotors 4 betätigt, bis die Bremsbeläge 12 eine Stellung erreicht haben, welche einem vorgegebenen Soll-Anlegepunkt entspricht. Dieser Vorgang wird in Fig.7 durch das Operationssymbol "Anlegepunkt weggesteuert anfahren" veranschaulicht. Anschließend wird die Antriebseinheit 10' zum Verschleißnachstellen gemäß der Operation "Nachstellermotor einschalten" solange aktiviert bis der Scherkraftmeßbolzen 58 erstmals ein Bremskraftsignal detektiert, wie die Verzweigung "Bremskraftanstieg, detektiert durch Kraftsensor ?" verdeutlicht, wodurch exakt der Verschleißweg kompensiert wird. Abschließend wird die Antriebseinheit 10' deaktiviert der Bremsaktuator 2 in die Lösestellung rückgestellt.

### Bezugszahlenliste

- 1: Bremszuspanneinrichtung
- 2: Bremsaktuator
- 4: Stellmotor
- 6: Aktuatorgehäuse
- 8: Kraftumsetzer
- 10: Bremsspindel
- 12: Bremsbelag
- 14: Bremsscheibe
- 16: Mutter-/Spindel-Baueinheit
- 18: Spindelmutter
- 20: Pleuel
- 22: Schiebehülse
- 24: Speicherfeder
- 26: Verriegelungseinrichtung
- 28: Pleuelkopf
- 36: Bremshebel
- 40: Gelenk
- 42: Spindelachse
- 46: Exzenterwelle
- 48: Zangenhebel
- 50: Zangenhebel
- 52: Bremszange
- 54: Belaghalter
- 58: Scherkraftmeßbolzen
- 59: Signalleitung
- 60: Steuer- und Regeleinrichtung
- 62: Leistungsteil
- 64: elektrische Leitung
- 66: Stromsensor
- 68: Signalleitung
- 70: Winkelencoder
- 72: Signalleitung
- 74: Leitung
- 76: Endschalter
- 78: Signalleitung
- 156: Druckstangensteller
- 2': Schraubgetriebe
- 4': Spindel
- 6': Trapezgewinde
- 8': Mutter
- 10': elektr. Antriebseinheit
- 12': Elektromotor
- 14'.: Getriebe
- 16': Planetengetriebe
- 18': Zahnradstufe
- 20': Mittelachse
- 22': Antriebsgehäuse
- 24': linkes Gehäuseteil
- 26': rechtes Gehäuseteil
- 28': Zahnrad
- 30': Zahnrad
- 32': Rillenkugellager
- 34': zylindrischer Fortsatz
- 36': Konushülse
- 38': Rutschkupplung
- 40': Kugeln
- 42': Bohrungen
- 44': Ring
- 46': Fortsatz
- 48': Gleitlager
- 50': Gewindezapfen
- 52': Konuskupplung
- 56': Konusfläche
- 58': Konusfläche
- 60': Durchgangsöffnung
- 62': Rillenkugellager
- 64': Dichtung
- 66': Hülse
- 68': Ansatzfläche
- 70': Rutschkupplung
- 72': Freilaufhülse
- 74': Freilauf
- 76': Axiallager
- 78': Wandung
- 80': Stirnplanverzahnung
- 82': Stirnplanverzahnung
- 84': äußerer Absatz
- 86': Schraubenfeder
- 96': Zahnhülse
- 98': Umfangsfläche
- 100': Gehäusefläche
- 102': Ringraum
- 104': Schlingfeder
- 106': Ende
- 108': Ende
- 112': elektr. Antriebseinheit
- 114': Gleichstrommotor
- 116'.: Planetengetriebe
- 118': Zahnradstufe
- 120': Zahnrad
- 122': Gehäuseabschnitt
- 124': Gehäuseabschnitt
- 126': Endlagenschalter
- 128': Fläche
- 132': Aufnahme
- 134': Fortsatz
- 136': Zahnrad
- 138': Schlingfeder
- 140': Schlingfederfreilauf

## Patentansprüche

1. Verfahren zur Ansteuerung einer elektrisch betätigten Verschleißnachstelleinrichtung (156) einer Bremszuspanneinrichtung (1) für Fahrzeuge, insbesondere für Schienenfahrzeuge, beinhaltend folgende Schritte :
a) Ermitteln eines aktuellen Anlegehubes von Bremsbelägen (12) an eine zugeordnete Bremsscheibe (14) oder Bremstrommel während einer Betriebsbremsung in Abhängigkeit von wenigstens einem gemessenen, von den Bremsbelägen (12) durchlaufenen Zuspannweg und einem diesem Zuspannweg zugeordneten und gemessenen Bremskraftwert,
b) Vergleichen des aktuellen Anlegehubes mit einem Soll-Anlegehub oder einem Soll-Anlegehub-Toleranzbereich und falls der aktuelle Anlegehub hiervon abweicht: Berechnen eines Nachstellweges aus der Abweichung,
c) Elektronisches Ansteuern der Verschleißnachstelleinrichtung (156) in Abhängigkeit des berechneten Nachstellweges, wobei
d) der zurückgelegte Zuspannweg der Bremsbeläge (12) während der Betriebsbremsung direkt oder indirekt an einem bewegten Bauteil (4) der Bremszuspanneinrichtung (1) gemessen wird,
**dadurch gekennzeichnet, dass**
e) während einer mit höherer Bremskraft erfolgten Betriebsbremsung mehrmals hintereinander der Bremskraftwert und der jeweils zugeordnete zurückgelegte Zuspannweg der Bremsbeläge (12) zur Bestimmung eines Bremskraft-Zuspannweg-Verlaufes gemessen werden, aus welchem der aktuelle Anlegehub extrapoliert wird, wobei Bremsungen mit höherer Bremskraft Bremsungen sind, bei welchen Bremskraftwerte von mehr als 3% bis 20% eines maximal möglichen Bremskraftwertes auftreten.

2. Verfahren nach Anspruch 1, **dadurch gekennzeichnet, dass** während einer mit geringerer Bremskraft erfolgten Betriebsbremsung lediglich der erstmalig auftretende Bremskraftwert und der zugeordnete zurückgelegte Zuspannweg der Bremsbeläge (12) zur Bestimmung des aktuellen Anlegehubes herangezogen werden, wobei Bremsungen mit geringerer Bremskraft Bremsungen sind, bei welchen Bremskraftwerte von kleiner gleich 3% bis 20 % eines maximal möglichen Bremskraftwertes auftreten.

3. Verfahren nach einem der vorhergehenden Ansprüche, **dadurch gekennzeichnet, dass** die Verschleißnachstelleinrichtung (156) zum Verschleißnachstellen für eine vom Nachstellweg abhängige Zeit betätigt wird.

4. Verfahren nach einem der vorhergehenden Ansprüche, **dadurch gekennzeichnet, dass** das Nachstellen des Belagspiels im gelösten oder nicht zugespannten Zustand der Bremszuspanneinrichtung (1) erfolgt.

5. Verfahren zur Ansteuerung einer elektrisch betätigten Verschleißnachstelleinrichtung (156) einer Bremszuspanneinrichtung (1) für Fahrzeuge, insbesondere für Schienenfahrzeuge, beinhaltend folgende Schritte :
a) Betätigen der Bremszuspanneinrichtung (1) bis die Bremsbeläge (12) einen vorgegebenen Soll-Anlegepunkt oder einen Soll-Anlegepunkt-Toleranzbereich erreicht haben,
b) anschließendes elektrisches Betätigen der Verschleißnachstelleinrichtung (156) bis erstmals ein gemessenes elektrisches Bremskraftsignal vorhanden ist,
c) abschließendes Rückstellen der Bremszuspanneinrichtung (1) in Lösestellung.

6. Verfahren nach Anspruch 5, **dadurch gekennzeichnet, dass** es zumindest zum Aufrüsten oder Initialisieren aus einer not- oder hilfsgelösten Stellung der Bremszuspanneinrichtung (1) zusammen mit einem Testlauf durchgeführt wird.

7. Vorrichtung zur Ansteuerung einer elektrisch betätigten Verschleißnachstelleinrichtung (156) einer Bremszuspanneinrichtung (1) für Fahrzeuge, insbesondere für Schienenfahrzeuge, beinhaltend folgendes :
a) Sensoren (58, 70) zum Messen wenigstens eines von Bremsbelägen (12) durchlaufenen Zuspannwegs und einem diesem Zuspannweg zugeordneten Bremskraftwert während einer Betriebsbremsung und zum Erzeugen entsprechender Ausgangssignale,
b) Mittel zum Ermitteln eines aktuellen Anlegehubes der Bremsbeläge (12) an eine zugeordnete Bremsscheibe (14) oder Bremstrommel in Abhängigkeit von den Ausgangssignalen,
c) Mittel zum Vergleichen des aktuellen Anlegehubes mit einem Soll-Anlegehub oder einem Soll-Anlegehub-Toleranzbereich und zum Berechnen eines Nachstellweges aus der Abweichung,
d) Mittel zum Ansteuern der Verschleißnachstelleinrichtung (156) in Abhängigkeit des berechneten Nachstellweges, wobei
e) die Mittel zum Ermitteln eines aktuellen Anlegehubes, die Mittel zum Vergleichen des aktuellen Anlegehubes mit einem Soll-Anlegehub oder einem Soll-Anlegehub-Toleranzbereich sowie die Mittel zum Ansteuern der Verschleißnachstelleinrichtung durch eine elektronische Steuer- und Regeleinheit (60) mit wenigstens einem Mikrocomputer gebildet werden, und wobei
f) der zurückgelegte Zuspannweg der Bremsbeläge (12) während der Betriebsbremsung direkt oder indirekt an einem bewegten Bauteil (4) der Bremszuspanneinrichtung (1) gemessen wird,
**dadurch gekennzeichnet, dass**
g) die elektronische Steuer- und Regeleinheit (60) mit den Sensoren (58, 70) und der Verschleißnachstelleinrichtung (156) derart kommuniziert, dass
h) während einer mit höherer Bremskraft erfolgten Betriebsbremsung mehrmals hintereinander der Bremskraftwert und der jeweils zugeordnete zurückgelegte Zuspannweg der Bremsbeläge (12) zur Bestimmung eines Bremskraft-Zuspannweg-Verlaufes gemessen werden, aus welchem der aktuelle Anlegehub extrapoliert wird, wobei Bremsungen mit höherer Bremskraft Bremsungen sind, bei welchen Bremskraftwerte von mehr als 3% bis 20% eines maximal möglichen Bremskraftwertes auftreten.

8. Vorrichtung nach Anspruch 7, **dadurch gekennzeichnet, dass** Sensoren zur Weg- oder Winkelmessung (70) sowie Sensoren (58) zur Kraftmessung vorgesehen sind.

9. Vorrichtung nach Anspruch 8, **dadurch gekennzeichnet, dass** die Bremszuspanneinrichtung (1) einen Kraftumsetzer (8) zur Umsetzung einer von einem Bremsaktuator (2) abgegebenen Energie in eine Bremszuspannbewegung umfaßt, wobei der Kraftumsetzer (8) einen im Kraftfluß angeordneten Scherkraftmeßbolzen (58) als Sensor zur Kraftmessung beinhaltet.

10. Vorrichtung nach Anspruch 9, **dadurch gekennzeichnet, dass** der Scherkraftmeßbotzen (58) einen Gelenkbolzen eines wenigstens zwei Kraftübertragungselemente (28, 36) des Kraftumsetzers (8) miteinander verbindenden Gelenks (40) bildet, wobei am Umfang des Scherkraftmeßbolzens (58) wenigstens ein Dehnmeßstreifen gehalten ist, welcher ein der auf das Gelenk (40) wirkenden und zur gerade vorliegenden Bremskraft proportionalen Kraft entsprechendes Signal erzeugt.

11. Vorrichtung nach Anspruch 10, **dadurch gekennzeichnet, dass** die Sensoren zur Weg- oder Winkelmessung einen Winkelencoder (70) beinhalten, welcher den Drehwinkel eines den Bremsaktuator (2) antreibenden Motors (4) mißt und ein entsprechendes Signal aussteuert.

12. Vorrichtung nach Anspruch 11, **dadurch gekennzeichnet, dass** die elektrisch betätigte Verschleißnachstelleinrichtung einen als Zug- oder Druckstangensteller (156) ausgebildeten Verschleißnachsteller aufweist, mit einem Schraubgetriebe (2'), das als Verschraubungsteile eine Gewindespindel (4') und eine auf dieser verschraubbare Mutter (8') aufweist, wobei das eine Verschraubungsteil (4') des Schraubgetriebes (2') zum Verschleißnachstellen und das andere Verschraubungsteil (8') zum Not- und/oder Hilfslösen der Bremse elektrisch angetrieben ist.

13. Fahrzeugbremse, insbesondere Schienenfahrzeugbremse, mit einer elektrisch betätigten Verschleißnachstelleinrichtung (156) einer Bremszuspanneinrichtung (1), beinhaltend eine Vorrichtung nach einem oder mehreren der Ansprüche 7 bis 12.

## Claims

1. Method of controlling an electrically operated wear adjustment means (156) of a brake application means (1) for vehicles, in particular for rail vehicles, comprising the following steps:
(a) determining a current stroke for application of brake linings (12) against an associated brake disc (14) or brake drum during service brake application as a function of at least one application distance measured and covered by said brake linings (12), and a brake force value associated with this application distance and measured,
(b) comparing the current stroke for application against a specified application stroke or a tolerance range of specified application strokes, and, if said current application stroke varies therefrom, computation of an adjustment distance from the variation,
(c) electronically controlling said wear adjustment means (156) as a function of the adjustment distance so computed, with
(d) the application distance covered by said brake linings (12) during service brake application being measured directly or indirectly on a moving component (4) of said brake application means (1),
**characterised in that**
(e) during a service brake operation performed with a stronger brake force, the value of the brake force and the associated respective application distance of said brake linings (12) are measured several times in succession for determining a brake force/application distance profile from which the current application stroke is extrapolated, with brake application operations with a stronger brake force being brake applications in which occur brake force values of more than 3% to 20% of a maximum brake force value possible.

2. Method according to Claim 1, **characterised in that** during a service brake application operation performed with a weaker brake force merely the brake force value occurring for the foist time and the associated brake application distance covered by said brake linings (12) are used for determining the current application stroke, with brake application operations with a weaker brake force are brake application operations wherein brake force values of less than or equal to 3% to 20% of a maximum brake force value possible occur..

3. Method according to any of the preceding Claims, **characterised in that** said wear adjustment means (156) is operated for adjusting the wear for a period of time dependent on the adjustment distance.

4. Method according to any of the preceding Claims, **characterised in that** the lining play is adjusted in the released or non-applied condition of said brake application means (1 ).

5. Method of controlling an electrically operated wear adjustment means (156) of a brake application means (1) for vehicles, in particular for rail vehicles, comprising the following steps:
(a) operating said brake application means (1) until said brake linings (12) have reached a predetermined specified application point or a range of tolerance of specified application points,
(b) subsequent electrical operation of said wear adjustment means (156) until a measured electrical brake force signal is present for the first time,
(c) final resetting of said brake application means (1) into the release position.

6. Method according to Claim 5, **characterised in that** it is performed at least for setting or initialising, jointly with a test cycle, from a position of said brake application means (1) in released emergency brake or auxiliary brake condition.

7. Device controlling an electrically operated wear adjustment means (156) of a brake application means (1) for vehicles, in particular for rail vehicles, comprising the following provisions:
(a) sensors (58, 70) for measuring at least one of brake application distances covered by brake linings (12) and a brake force value associated with this brake application distance during a service brake application operation and for generating respective output signals,
(b) means for determining a current stroke of application of said brake linings (12) against an associated brake disc (14) or brake drum as a function of said output signals,
(c) means for comparing the current application stroke against a specified application stroke or a tolerance range of specified application strokes and for computation of an adjustment distance from the variation,
(d) means for controlling said wear adjustment means (156) as a function of the adjustment distance so computed, wherein
(e) said means for determining a current application stroke, said means for comparing said current application stroke against a specified application stroke or a tolerance range of specified application strokes as well as said means for controlling said wear adjustment means are constituted by an electronic controller and regulating unit (60) with at least one microcomputer, and wherein
(f) the brake application distance covered by said brake linings (12) during service brake application operations is directly or indirectly measured on a moving component (4) of said brake application means (1),
**characterised in that**
(g) said electronic controller and regulating unit (60) communicates with said sensors (58, 70) and said wear adjustment means (156) in such a manner that
(h) the brake force value and the respective associated brake application distance of said brake linings (12) are measuring during a service brake application operation performed with a stronger brake force several times in succession for determining a brake force/application distance profile from which said current application stroke is extrapolated, with brake application operations with a stronger brake force being brake applications in which occur brake force values of more than 3% to 20% of a maximum brake force value possible

8. Device according to Claim 7 **characterised in that** sensors are provided for distance or angle measurement (70) as well as sensors (58) for measurement of force.

9. Device according to Claim 8, **characterised in that** said brake application means (1) includes a force converter (8) for converting an energy output from a brake actuator (2) into a brake application movement, with said force converter (8) including a shearing force measuring pin (58) as sensor for force measurement, which is disposed in the path of the force transmitted.

10. Device according to Claim 9, **characterised in that** said shearing force measuring pin (58) constitutes a hinged bolt of a joint connecting at least two force transmitter elements (28, 36) of said force converter (8) to each other, with at least one strain gauge being held on the periphery of said shearing force measuring pin (58), which generates a signal corresponding to a force acting upon said joint (40) and proportional to the actually present brake force.

11. Device according to Claim 10, **characterised in that** said sensors for distance or angle measurement include an angle encoder (70) that measures the angle of rotation of a motor (4) driving said brake actuator (2) and controls a corresponding signal.

12. Device according to Claim 11, **characterised in that** said electrically operated wear adjustment means includes a wear adjuster configured as tensile or pressure bar adjuster (156), comprising a screw gear (2') including a threaded spindle (4') and a nut (8') screwable onto said spindle as screwing elements, wherein the first screwing element (4') of said screw gear (2') is electrically driven for wear adjustment whilst the other screwing element (8') is driven for emergency and/or auxiliary release of the brake.

13. Vehicle brake, in particular rail vehicle brake, comprising an electrically operated wear adjustment means (156) of a brake application means (1), including a device according to one or several of the Claims 7 to 12.

## Revendications

1. Procédé de commande d'un mécanisme de rattrapage d'usure (156) actionné électriquement, dans un dispositif de serrage de frein (1) pour véhicules, notamment pour des véhicules sur rails, présentant les étapes suivantes :
a) détermination d'une course d'application instantanée de garnitures de frein (12) sur un disque de frein (14) ou un tambour de frein associé, lors d'un freinage de service, en fonction d'au moins un déplacement de serrage mesuré, effectué par les garnitures de frein (12), et d'une valeur de force de serrage associée à ce déplacement de serrage et mesurée ;
b) comparaison de la course d'application instantanée avec une course d'application de consigne ou une plage de tolérance de course d'application, et, dans le cas où la course d'application instantanée s'en écarte, calcul d'un déplacement de rattrapage d'usure à partir de l'écart ;
c) commande électronique du mécanisme de rattrapage d'usure (156) en fonction du déplacement de rattrapage d'usure calculé, dans lequel
d) le déplacement de serrage, effectué par les garnitures de frein (12) pendant le freinage de service, est mesuré directement ou indirectement sur une pièce mobile (4) du dispositif de serrage de frein (1),
**caractérisé en ce que**
e) pendant un freinage de service effectué avec une force de freinage assez grande, on mesure plusieurs fois successivement la valeur de la force de freinage et du déplacement de serrage associé respectivement effectué par les garnitures (12) de frein pour la détermination d'une courbe force de freinage-déplacement de serrage, courbe à partir de laquelle on extrapole la course d'application instantanée, des freinages ayant une force de freinage assez grande étant des freinages dans lesquels des valeurs de force de freinage de plus de 3% à 20% d'une valeur de force de freinage maximum possible se produisent.

2. Procédé selon la revendication 1, **caractérisé en ce que** pendant un freinage de service effectué avec une force de freinage assez petite, on prend en considération uniquement la valeur de force de freinage apparaissant en premier lieu et le déplacement de serrage associé effectué par les garnitures de frein (12) pour la détermination de la course d'application instantanée, des freinages ayant une force de freinage assez petite étant des freinages pour lesquels apparaissent des valeurs de force de freinage inférieures ou égales à 3% à 20% d'une valeur de force de freinage maximale possible.

3. Procédé selon l'une des revendications précédentes, **caractérisé en ce que** le mécanisme de rattrapage d'usure (156) est actionné pour le réglage de rattrapage d'usure, pour un temps qui dépend du déplacement de rattrapage.

4. Procédé selon l'une des revendications précédentes, **caractérisé en ce que** le rattrapage du jeu de garniture s'effectue dans l'état desserré ou non serré du dispositif de serrage de frein (1).

5. Procédé de commande d'un mécanisme de rattrapage d'usure (156) actionné électriquement, dans un dispositif de serrage de frein (1) pour véhicules, notamment pour des véhicules sur rails, présentant les étapes suivantes :
a) actionnement du dispositif de serrage de frein (1) jusqu'à ce que les garnitures de frein (12) atteignent un point d'application de consigne prescrit ou une plage de tolérance de point d'application de consigne,
b) actionnement électrique ensuite du mécanisme de rattrapage d'usure (156) jusqu'à ce qu'apparaisse pour la première fois un signal de force de freinage mesuré,
c) retour final du dispositif de serrage de frein (1) dans la position de desserrée.

6. Procédé selon la revendication 5, **caractérisé en ce qu'**il est effectué, au moins pour le nouvel équipement ou l'initialisation à partir d'une position de desserrage d'urgence ou de desserrage auxiliaire du dispositif de serrage de frein (1), en commun avec une phase de test.

7. Dispositif de commande d'un mécanisme de rattrapage d'usure (156) actionné électriquement, dans un dispositif de serrage de frein (1) pour véhicules, notamment pour des véhicules sur rails, comprenant ce qui suit :
a) des capteurs (58, 70) pour mesurer au moins un déplacement de serrage effectué par des garnitures de frein (12) et une valeur de force de freinage associée à ce déplacement de serrage, pendant un freinage de service, et pour engendrer des signaux de sortie correspondants ;
b) des moyens pour déterminer une course d'application instantanée des garnitures de frein (12) sur un disque de frein (14) ou un tambour de frein associé, en fonction des signaux de sortie ;
c) des moyens pour comparer la course d'application instantanée à une course d'application de consigne ou à une plage de tolérance de course d'application de consigne, et pour calculer un déplacement de rattrapage d'usure à partir de l'écart ;
d) des moyens pour commander le mécanisme de rattrapage d'usure (156) en fonction du déplacement de rattrapage d'usure calculé, dans lequel
e) les moyens pour déterminer une course d'application instantanée, les moyens pour comparer la course d'application instantanée à une course d'application de consigne ou à une plage de tolérance de course d'application de consigne, ainsi que les moyens pour commander le mécanisme de rattrapage d'usure, sont formés par une unité électronique de commande et de régulation (60) comprenant au moins un microordinateur, et dans lequel
f) le déplacement de serrage effectué par les garnitures de frein (12) pendant le freinage de service est mesuré directement ou indirectement sur un élément (4) déplacé du dispositif (1) de serrage de frein
**caractérisé en ce que**
g) l'unité (60) électronique de commande et de régulation communique avec les capteurs (58, 70) et avec le mécanisme de rattrapage d'usure (156) de manière à ce que,
h) pendant un freinage de service effectué avec une force de freinage assez grande, on mesure plusieurs fois successivement la valeur de la force de freinage et du déplacement de serrage associé respectivement effectué par les garnitures (12) de frein pour la détermination d'une courbe force de freinage-déplacement de serrage, courbe à partir de laquelle on extrapole la course d'application instantanée, des freinages ayant une force de freinage assez grande étant des freinages dans lesquels des valeurs de force de freinage de plus de 3% à 20% d'une valeur de force de freinage maximum possible se produisent.

8. Dispositif selon la revendication 7, **caractérisé en ce que** sont prévus des capteurs (70) pour mesurer des déplacements ou des angles, et des capteurs (58) pour mesurer une force.

9. Dispositif selon la revendication 8, **caractérisé en ce que** le dispositif de serrage de frein (1) comprend un convertisseur de force (8) pour convertir l'énergie délivrée par un actionneur de freinage (2) en un mouvement de serrage du frein, le convertisseur de force (8) comprenant en guise de capteur pour la mesure de la force, une broche de mesure de force de cisaillement (58) montée dans le parcours de transmission de force.

10. Dispositif selon la revendication 9, **caractérisé en ce que** la broche de mesure de force de cisaillement (58) forme un axe d'articulation d'une articulation (40) reliant au moins deux éléments de transmission de force (28, 36) du convertisseur de force (8), au moins une jauge extensométrique étant placée sur la périphérie de la broche de mesure de force de cisaillement (58), et engendrant un signal correspondant à la force agissant sur l'articulation (40) et proportionnelle à la force de freinage justement active.

11. Dispositif selon la revendication 10, **caractérisé en ce que** les capteurs pour la mesure d'un déplacement ou d'un angle comprennent un encodeur angulaire (70) qui mesure l'angle de rotation d'un moteur (4) entraînant l'actionneur de frein (2), et délivre un signal correspondant.

12. Dispositif selon la revendication 11, **caractérisé en ce que** le mécanisme de rattrapage d'usure actionné électriquement comprend dispositif de rattrapage d'usure réalisé sous la forme d'un dispositif de réglage (156) à tiges de traction ou de compression, comprenant une transmission à vis (2') qui présente en guise de pièces de vissage, une vis (4') et un écrou (8') pouvant être vissé sur celle-ci, l'une des pièces de vissage (4') de la transmission à vis (2') étant entraînée électriquement pour le réglage de rattrapage d'usure et l'autre pièce de vissage (8') pour le desserrage d'urgence et/ou auxiliaire du frein.

13. Frein de véhicule, notamment frein de véhicule sur rails, comprenant un mécanisme de rattrapage d'usure (156) actionné électriquement pour un dispositif de serrage de frein (1), englobant un dispositif selon l'une ou plusieurs des revendications 7 à 12.
